# EUROPÄISCHE PATENTSCHRIFT

(11) **EP 1 573 763 B1**
(45) Veröffentlichungstag und Bekanntmachung des Hinweises auf die Patenterteilung: **26.04.2006**
(21) Anmeldenummer: 03785549.1
(22) Anmeldetag: 02.12.2003
(51) Int. Cl.: H01H 1/18, B60Q 5/00

(54) **VORRICHTUNG ZUR BETÄTIGUNG VON ELEKTRISCHEN FUNKTIONSGRUPPEN, INSBESONDERE VON HUPEN AN LENKRÄDERN VON KRAFTFAHRZEUGEN**
DEVICE FOR ACTUATING ELECTRIC FUNCTIONAL GROUPS, IN PARTICULAR HORNS ON THE STEERING WHEELS OF MOTOR VEHICLES
DISPOSITIF POUR ACTIONNER DES GROUPES DE FONCTION ELECTRIQUES, NOTAMMENT UN KLAXON MONTE SUR LE VOLANT D'UN VEHICULE A MOTEUR

(30) Priorität: 18.12.2002 DE 20219729 U
(43) Veröffentlichungstag der Anmeldung: 14.09.2005
(73) Patentinhaber: Takata-Petri AG, 63743 Aschaffenburg (DE)
(72) Erfinder: HÖLZEL, Thomas, 64850 Schaafheim (DE); HEEG, Markus, 63773 Goldbach (DE); SAUER, Frank, 63843 Niedernberg (DE)
(74) Vertreter: Baumgärtel, Gunnar
(86) Internationale Anmeldenummer: PCT/DE2003/003998
(87) Internationale Veröffentlichungsnummer: WO 2004/055845

(56) Entgegenhaltungen:
- EP-A- 0 390 029
- EP-A- 1 099 604
- CH-A- 204 988
- DE-C- 758 108
- DE-C- 19 852 243
- US-A- 2 671 840
- US-A- 5 459 294
- PATENT ABSTRACTS OF JAPAN Bd. 0161, Nr. 15 (M-1224), 23. März 1992 (1992-03-23) & JP 3 284470 A (TOKAI RIKA CO LTD), 16. Dezember 1991 (1991-12-16)
- PATENT ABSTRACTS OF JAPAN Bd. 1998, Nr. 01, 30. Januar 1998 (1998-01-30) & JP 9 254791 A (TOYODA GOSEI CO LTD), 30. September 1997 (1997-09-30)
- PATENT ABSTRACTS OF JAPAN Bd. 2002, Nr. 10, 10. Oktober 2002 (2002-10-10) & JP 2002 166813 A (T S TEC KK), 11. Juni 2002 (2002-06-11)

## Beschreibung

Die Erfindung betrifft eine Vorrichtung zur Betätigung von elektrischen Funktionsgruppen, insbesondere von Hupen an Lenkrädern von Kraftfahrzeugen nach dem Oberbegriff des Anspruchs 1.

Aus der WO 01/66383 A1 ist ein Lenkrad für Kraftfahrzeuge mit einer Vorrichtung zum Betätigen einer elektrischen Funktionsgruppe eines Kraftfahrzeugs bekannt, bei dem ein Kontaktelement an einer Baugruppe des Lenkradskeletts und das andere gegenüberliegende Kontaktelement an einer bezüglich des Lenkradskeletts beweglichen Baugruppe gelagert ist. Das an der beweglichen Baugruppe gelagerte Kontaktelement ist federnd gelagert und kann deshalb beim Niederdrücken entlang des anderen Kontaktelementes gleiten. Infolge der dadurch auftretenden Reibung werden die Kontaktelemente von Verschmutzung gereinigt bzw. von einer Oxidschicht befreit.

Der Nachteil dieser Vorrichtung besteht darin, daß wie bei anderen Vorrichtungen des Standes der Technik eine Zweiteilung der Kontaktelemente vorhanden ist, da diese an den oben genannten unterschiedlichen Baugruppen befestigt sind. Deshalb müssen beide Baugruppen optimal aufeinander abgestimmt sein, um eine einwandfreie Funktion zu erreichen.

Ein weiterer Nachteil besteht darin, daß zur Erzielung der Gleitbewegung des beweglichen Kontaktes dieser aufwendig gelagert werden muß, indem z.B. eine Stützeinrichtung für den beweglichen Kontakt erforderlich ist.

Aus der EP 1 099 604 A2 ist eine Vorrichtung zur Hornbetätigung bekannt, bei der eine gesonderte Einrichtung zwei Kontaktelemente aufweist, die zur Betätigung der Funktionsgruppe miteinander in Kontakt bringbar sind. Die Kontaktelemente sind jeweils an einem Trägerelement befestigt. Als Trägerelemente werden zwei nebeneinander angeordnete Blechteile verwendet, die durch Umspritzungen mit einem isolierenden Material verbunden sind. Die Fixierung der Vorrichtung auf dem Lenkradgehäuse erfolgt durch Bolzen.

In der EP 0 390 029 A2 wird ein Hornschalter beschrieben, bei dem einer feststehenden Kontakplatte eine federnde Kontaktplatte zugeordnet ist. Die Kontaktplatten bestehen aus Metall und zwischen den Kontaktplatten ist eine Isolierplatte 15 angeordnet. Die Kontaktplatten sind nicht durch Umspritzuungen mit einem isolierenden Material miteinander verbunden. Die Fixierung des Hornschalters erfolt mittels Bolzen.

Der Erfindung liegt die Aufgabe zugrunde, bei einer Vorrichtung zur Betätigung von elektrischen Funktionsgruppen mit einer Kontakteinrichtung, die sich selbst reinigt, eine einwandfreie Funktion mit geringerem Aufwand zu erreichen.

Erfindungsgemäß wird das gemäß den Merkmalen des Ansprchs 1 erreicht.

Bei einer Vorrichtung zur Betätigung von elektrischen Funktionsgruppen, insbesondere von Hupen an Lenkrädern von Kraftfahrzeugen, mit mindestens zwei gegenüberliegenden Kontakten, die zur Betätigung der Funktionsgruppe miteinander in Kontakt bringbar sind und die zu ihrer Selbstreinigung während des Kontaktierens gegeneinander gleiten, sind die gegenüberliegenden Kontakte an je einem Trägerelement befestigt, die beide elastisch verformbar sind. Die Vorrichtung zur Betätigung von elektrischen Funktionsgruppen ist als gesonderte Baugruppe ausgebildet ist, die am Einsatzort befestigbar ist. Als Trägerelemente sind Bleche vorgesehen. Es werden zwei Blechteile verwendet, die durch mehrere Umspritzungen mit einem isolierenden Material verbunden sind, wobei beide Blechteile im Abstand zueinander angeordnet sind. Erfindungsgemäß sind Rastelemente an den Umspritzungen vorgesehen.

Der Vorteil dieser Anordnung besteht darin, daß wegen der elastischen Verformbarkeit beider Trägerelemente diese einfach gestaltet sein können. Weiterhin wird wegen der elastischen Verformbarkeit beider Trägerelemente eine noch sichere Selbstreinigung erzielt.

Dadurch, daß die Vorrichtung zur Betätigung von elektrischen Funktionsgruppen als gesonderte Baugruppe ausgebildet ist, die am Einsatzort befestigbar ist, sind Kontakte und Gegenkontakte nicht mehr in unterschiedlichen Baugruppen angeordnet, wie es bisher der Fall ist, sondern sie sind Bestandteil einer Baugruppe, die ein geschlossenes System bildet. Diese Baugruppe kann damit gesondert gefertigt werden, wodurch die notwendige Herstellungsgenauigkeit mit geringerem Aufwand erzielbar ist, als bei einer Anordnung, bei der Kontakte und Gegenkontakte unterschiedlichen Baugruppen zugeordnet sind. Die erfindungsgemäße Baugruppe kann problemlos am Lenkrad oder am Airbagmodul z. B. durch Verrasten befestigt werden.

Weiterhin sollte auch ein Steckergehäuse für die Herstellung der elektrischen Verbindung zu den Kontakten als Umspritzung der Blechteile ausgeführt sein.

Die gegenüberliegenden Kontakte der Vorrichtung sind vorzugsweise an mindestens einem Ende der Trägerelemente vorgesehen. An dieser Stelle lassen sich die Trägerelemente leicht verformen und damit ist nur ein leichter Druck zur Betätigung der elektrischen Funktionsgruppe, z.B. der Hupe, erforderlich. Hierzu sind die Umspritzungen aus isolierendem Material an mindestens einem Endabschnitt der Trägerelemente so angeordnet, daß die Enden der Trägerelemente, an denen die Kontakte angeordnet sind, frei liegen.

Es ist weiterhin vorteilhaft, wenn sich die Umspritzungen an der Seite, die in eingebauter Lage unten liegt, unterhalb des unteren Trägerelementes weiter in Richtung der Enden der Trägerelemente erstrecken als auf der Gegenseite. Dadurch kann sich das untere Trägerelement nur im Bereich der an seinen Enden befestigten Kontakte elastisch verformen, so daß der Platzbedarf unterhalb des unteren Trägerelementes für dessen elastische Verformung verringert wird. Zur Erreichung dieses Zieles können die Trägerelemente an ihren Enden auch nach oben um maximal 20° und vorzugsweise 15° abgewinkelt sein.

Für die Anordnung der Vorrichtung in einem Lenkrad ist es zweckmäßig, daß jedes Trägerelement zwei im Winkel zueinander verlaufende Teilelemente aufweist, wobei ein Ende eines zweiten Teilelementes in der Umspritzung eines ersten Teilelementes mit diesem verbunden ist. Kontaktpaare sind bei dieser Ausführungsform an den Enden der ersten Teilelemente und am freien Ende der zweiten Teilelemente vorgesehen, wobei die Kontaktpaare in den Ecken eines gedachten Dreiecks liegen.

Zur Erzielung einer guten Selbstreinigung der Kontakte weist in einer bevorzugten Ausführungsform jeweils ein Kontakt eine sphärische Kontaktfläche auf und während der jeweils gegenüberliegende Kontakt eine Kontaktfläche mit ebener Makrostruktur hat. Weiterhin sollte der Kontakt mit der ebenen Makrostruktur eine feinstrukturierte Oberfläche aufweisen, indem z.B. Rillen vorgesehen sind. Der Kontakt, in dem die Rillen vorgesehen sind, kann so angerodnet sein, daß diese quer zur Richtung verlaufen, in der die Kontakte gegeneinander gleiten. Dieser Kontakt kann aber auch so angeordnet sein, daß die Rillen unter einem Winkel von größer 0° und kleiner 90° , vorzugsweise unter einem Winkel von 45°, bezüglich der Richtung verlaufen, in der die Kontakte gegeneinander gleiten.

Die Kontaktflächen bestehen vorzugsweise aus Feinkornsilber.

Es ist weiterhin zweckmäßig, daß der Kontakt mit der ebenen Makrostruktur über dem Kontakt mit der sphärischen Kontaktfläche angeordnet ist.

Die Erfindung soll in einem Ausführungsbeispiel anhand von Zeichnungen erläutert werden. Es zeigen:

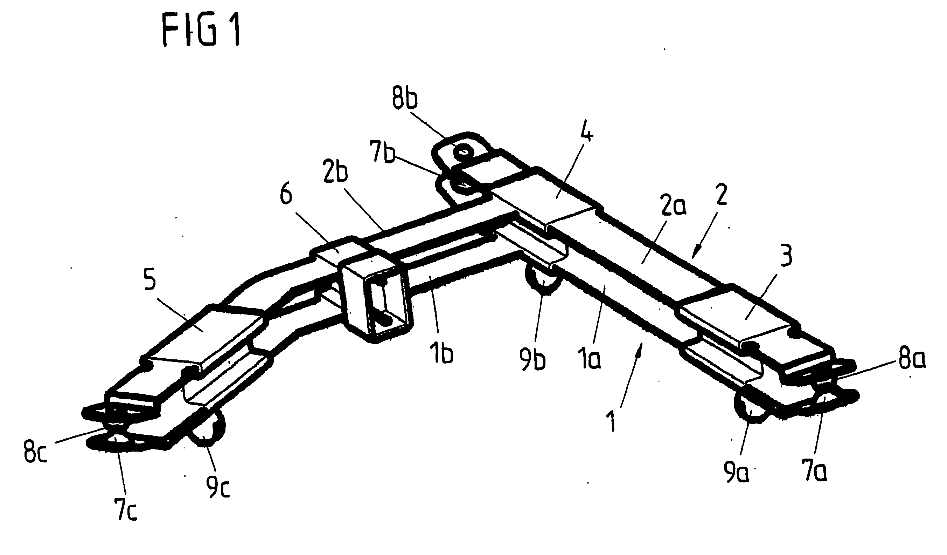

- Fig. 1: eine perspektivische Ansicht der erfindungsgemäßen Vorrichtung;
- Fig. 2: eine Draufsicht auf die Vorrichtung nach Fig. 1;
- Fig. 3: einen Schnitt A-A gemäß Fig.2 durch die Vorrichtung;
- Fig. 4: eine Ansicht Y gemäß Fig. 3
- Fig. 5: eine vergrößerte Darstellung der Einzelheit D der Fig. 3
- Fig. 6: die Seitenansicht des Kontaktes mit ebener Makrostruktur;

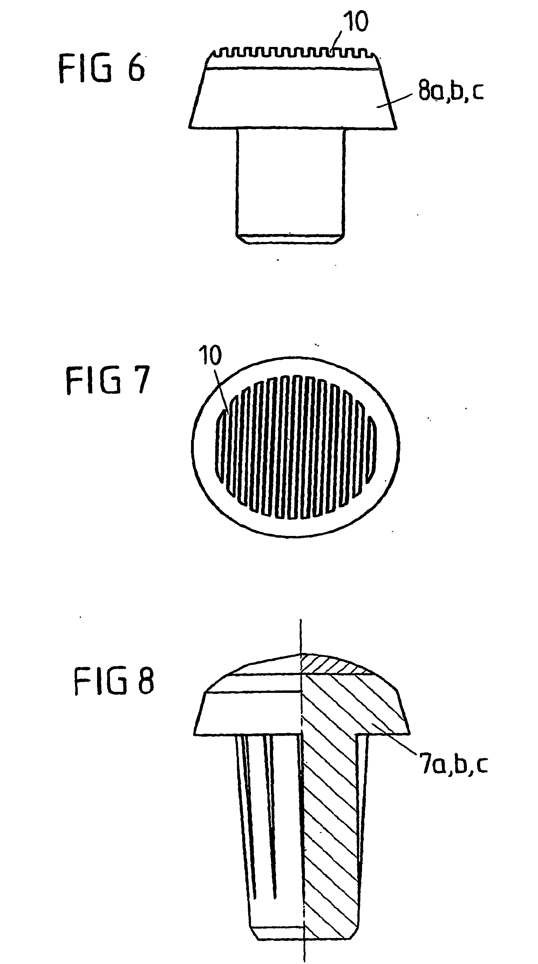

- Fig. 7: eine Draufsicht auf den Kontakt nach Fig. 6;
- Fig. 8: eine Seitenansicht, teilweise geschnitten, des Kontaktes mit gewölbter Oberfläche;
- Fig. 9a-c: die Funktonsweise der Vorrichtung.

Aus der perspektivischen Ansicht einer Ausführungsform der erfindungsgemäßen Vorrichtung für ein Lenkrad ist erkennbar, daß diese eine gesonderte Baugruppe darstellt, die im Gegensatz zu bisherigen Vorrichtungen zur Betätigung von elektrischen Funktionselementen insbesondere von Hupen, deren Teile auf unterschiedlichen Baugruppen des Lenkrades angeordnet sind, komplett vorgefertigt werden und einfach montiert werden kann. Die Vorrichtung weist zwei Trägerelemente 1, 2 auf, die durch Kunststoffumspritzungen 3, 4, 5 in einem vorbestimmten Abstand zueinander gehalten werden. Das Trägerelement 1 weist zwei im Winkel zueinander verlaufende Teilelemente 1a und 1b und das Trägerelement 2 in gleicher Richtung wie die Teilelemente 1a, 1b verlaufende Teilelemente 2a und 2b auf. Die Trägerelemente bestehen aus elektrisch leitenden, elastisch verformbaren Blechteilen und können einstückig gefertigt sein oder aus zwei Teilen bestehen, die elektrisch leitend miteinander verbunden sind. Die Verbindungstelle liegt innerhalb der Umspritzung 4. Ein Stecker 6 ist ebenfalls als Umspritzung ausgeführt.

Das Teilelement 1a des Trägerelementes 1 weist an seinen Enden Kontakte 7a, b auf und das Teilelement 1b weist an seinem freien Ende einen Kontakt 7c auf. An den Enden des Teilelementes 2a sind Kontakte 8a, b vorgesehen, die den Kontakten 7a, b gegenüberliegen und am Teilelement 2b ist ein Kontakt 8c vorgesehen, der dem Kontakt 7c gegenüberliegt. Das Trägerelement 1 weist weiterhin drei Rastelemente 9a, b, c auf.

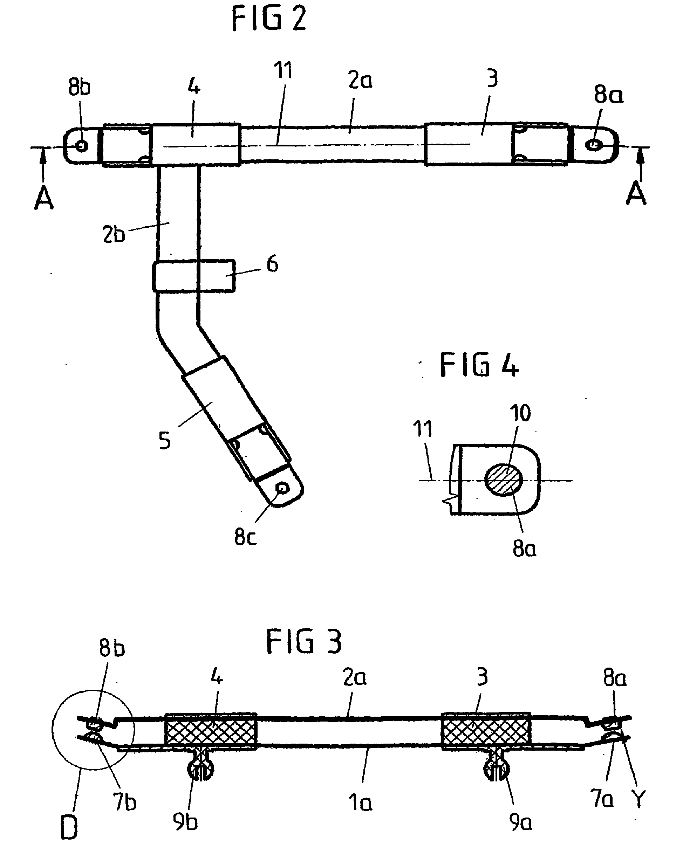

Aus der Draufsicht der Fig. 2 ist ersichtlich, daß das Teilelement 2b nicht geradlinig verläuft sondern abgewinkelt ist, so daß die Kontakte in der Draufsicht etwa in den Eckpunkten eines Dreiecks liegen, das einer Lenkradform angepaßt ist.

Wie aus der Fig. 3 erkennbar ist, erstrecken sich die Umspritzungen 3, 4 an der Unterseite, an der die Rastelemente 9a, 9b vorgesehen sind, weiter in Richtung der Enden des Teilelemente 1a als auf der Gegenseite am Teilelement 2a. Das gleiche trifft auch für die Umspritzung 5 zu, die sich am Teilelement 1b weiter zum Ende hin erstreckt als am Teilelement 2b. Dadurch wird erreicht, daß sich die Teilelemente 1a, 1b in diesem Bereich nicht verformen können, in dem bei der Betätigung der Funktionselemente Druck auf das Trägerelement 2 ausgeübt wird.

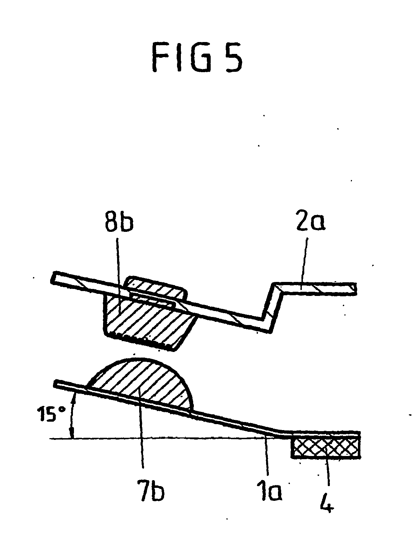

In der Fig. 5 sind die freien Enden der Teilelemente 1a, 2a vergrößert dargestellt, die in der Fig. 3 links liegen. Der am frei liegenden Ende des Teilelementes 1a angebrachte Kontakt 7b weist eine sphärische oder annähernd sphärische Kontaktfläche auf, wie es auch aus der Fig. 8 erkennbar ist. Der Kontakt ist in der Fig. 8 als Niet ausgebildet, der mit den Teilelementen 1a, 1b verbunden wird. Der am freiliegenden Ende des Teilelementes 2a angebrachte Kontakt 8b weist eine Kontaktfläche mit ebener Makrostruktur auf, wie es auch aus der Fig. 6 erkennbar ist. In diese ebene Struktur sind Rillen 10 eingearbeitet. Diese verlaufen nach der Befestigung am Teilelement 2a in der vorliegenden Ausführungsform unter einem Winkel von 45° gegenüber der später erläuterten Verschieberichtung der Kontakte. Die Verschieberichtung stimmt im wesentlichen mit der Längsachse 11 der Teilelemente 1a, 1b überein (Figuren 2, 4). Der Kontakt 8b ist ebenfalls als Niet ausgebildet, wie aus der Fig. 6 ersichtlich ist.

Die in der Fig. 5 dargestellte Anordnung der Kontakte 7b, 8b trifft auch für die übrigen Kontakte zu. Das trifft auch für den insbesondere aus den Figuren 2 und 5 erkennbaren Verlauf der freileigenden Enden der Trägerelemente 1, 2 zu. Aus diesen Figuren ist erkennbar, daß diese Enden entgegen der Seite mit den Rastelementen, d.h. nach oben abgewinkelt sind. In der vorliegenden Ausführungsform sind sie um 15° abgewinkelt. Dadurch steht ein ausreichender Freiraum für die Verformung der freiliegenden Enden der Trägerelemente 1, 2 zur Verfügung.

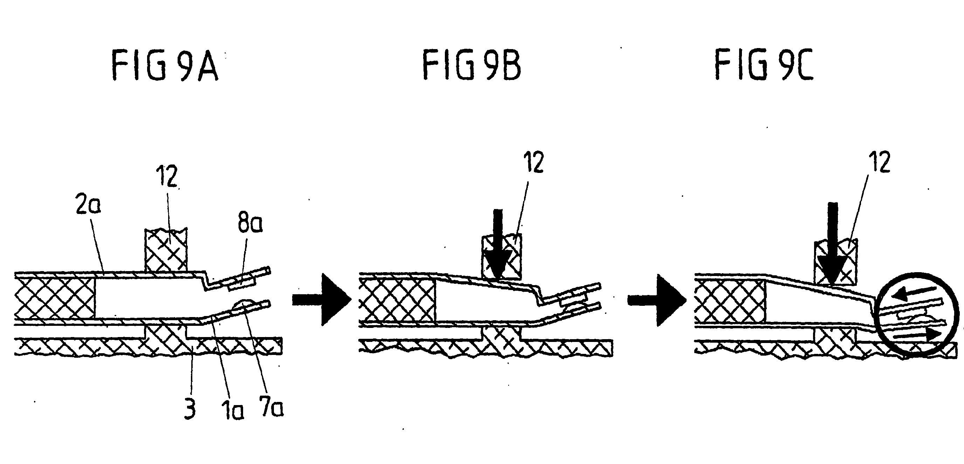

Aus den Figuren 9a - 9c ist die Funktionsweise der Vorrichtung dargestellt. Die Fig. 9a zeigt die Ruhelage der Kontakte, bei der ein Betätigungselement 12 auf dem Teilelement 2a locker aufliegt. Durch Niederdrücken des Betätigungselementes, wie es in der Fig. 9b dargestellt ist, werden die Kontakte 7a, 8a aufeinander gedrückt. Dabei wird zunächst nur das freiliegende Ende des Teilelementes 2a elastisch verformt. Durch weiteres Niederdrücken des Betätigungselementes 12, wie es in Fig. 9c dargestellt ist, wird auch das Teilelement 1a elastisch verformt. Dabei verschieben sich die Kontakte 7a, 8a gegeneinander, wie es in der Fig. 9c durch die von einem Kreis umschlossenen Pfeile deutlich gemacht worden ist. Bei dieser Verschiebung reiben die Kontaktflächen aufeinander und reinigen sich dabei selbst.

Die hier für ein Kontaktpaar erläuterte Funktionsweise trifft auch für die übrigen Kontaktpaare 7b, 8b sowie 7c, 8c zu.

Durch die erstmalige Ausnutzung der elastischen Verformung beider Kontaktträger wird die für die Selbstreinigung der Kontakte notwendige Verschiebung mit geringerem Aufwand erreicht als bisher.

## Patentansprüche

1. Vorrichtung zur Betätigung von elektrischen Funktionsgruppen, insbesondere von Hupen an Lenkrädern von Kraftfahrzeugen, mit mindestens zwei gegenüberliegenden Kontakten (7a-7c, 8a-8c), die zur Betätigung der Funktionsgruppe miteinander in Kontakt bringbar sind und die zu ihrer Selbstreinigung während des Kontaktierens gegeneinander gleiten, wobei die gegenüberliegenden Kontakte (7a-7c, 8a-8c) an je einem Trägerelement (1, 2) befestigt sind, die beide elastisch verformbar sind und wobei die Vorrichtung als gesonderte Baugruppe ausgebildet ist, die am Einsatzort befestigbar ist, wobei die Vorrichtung zwei Blechteile (1, 2) als Trägerelemente aufweist, die durch mehrere Umspritzungen (3, 4, 5) mit einem isolierenden Material verbunden sind, wobei beide Blechteile (1, 2) im Abstand zueinander angeordnet sind,
**dadurch gekennzeichnet,**
**daß** die Umspritzungen (3, 4, 5) Rastelemente (9a-9c) aufweisen.

2. Vorrichtung nach Anspruch 1, **dadurch gekennzeichnet, daß** ein Steckergehäuse (6) als Umspritzung der Blechteile ausgeführt ist.

3. Vorrichtung nach Anspruch 1 oder 2, **dadurch gekennzeichnet, daß** die gegenüberliegenden Kontakte (7a-7c, 8a-8c) an mindestens einem Ende der Trägerelemente (1, 2) vorgesehen sind.

4. Vorrichtung nach mindestens einem der vorhergehenden Ansprüche, **dadurch gekennzeichnet, daß** die Umspritzungen (3, 4, 5) aus isolierendem Material an mindestens einem Endabschnitt der Trägerelemente (1, 2) so angeordnet sind, daß die Enden der Trägerelemente, an denen die Kontakte (7a-7c, 8a-8c) angeordnet sind, frei liegen.

5. Vorrichtung nach mindestens einem der vorhergehenden Ansprüche, **dadurch gekennzeichnet, daß** sich die Umspritzungen (3, 4, 5) an der Seite, die in eingebauter Lage unten liegt, unterhalb des unteren Trägerelementes (1) weiter in Richtung der Enden der Trägerelemente erstrecken als auf der Gegenseite.

6. Vorrichtung nach mindestens einem der vorhergehenden Ansprüche, **dadurch gekennzeichnet, daß** die Trägerelemente (1, 2) an ihren Enden nach oben abgewinkelt sind.

7. Vorrichtung nach Anspruch 6, **dadurch gekennzeichnet, daß** die Trägerelemente (1, 2) um maximal 20° abgewinkelt sind.

8. Vorrichtung nach Anspruch 6 oder 7, **dadurch gekennzeichnet, daß** die Trägerelemente (1, 2) um 15° abgewinkelt sind.

9. Vorrichtung nach mindestens einem der vorhergehenden Ansprüche, **dadurch gekennzeichnet, daß** jedes Trägerelement (1, 2) zwei im Winkel zueinander verlaufende Teilelemente (1a, 1b; 2a, 2b) aufweist, wobei ein Ende eines zweiten Teilelementes (1b, 2b) in der Umspritzung (4) eines ersten Teilelementes (1a, 2a) mit diesem verbunden ist.

10. Vorrichtung nach Anspruch 9, **dadurch** gekeimzeichnet, daß Kontaktpaare (7a, 8a; 7b, 8b; 7c, 8c) an den Enden der ersten Teilelemente (1a, 2a) und am freien Ende der zweiten Teilelemente (1b, 2b) vorgesehen sind, wobei die Kontaktpaare in den Ecken eines gedachten Dreiecks liegen.

11. Vorrichtung nach mindestens einem der vorhergehenden Ansprüche, **dadurch gekennzeichnet, daß** die Vorrichtung an einem Lenkrad oder an einem Airbagmodul befestigt ist.

12. Vorrichtung nach mindestens einem der vorhergehenden Ansprüche, **dadurch gekennzeichnet, daß** jeweils ein Kontakt (7a, 7b, 7c) eine sphärische Kontaktfläche aufweist und daß der jeweils gegenüberliegende Kontakt (8a, 8b, 8c) eine Kontaktfläche mit ebener Makrostruktur hat.

13. Vorrichtung nach mindestens einem der vorhergehenden Ansprüche, **dadurch gekennzeichnet, daß** der Kontakt (8a, 8b, 8c) mit der ebenen Makrostruktur eine feinstrukturierte Oberfläche aufweist.

14. Vorrichtung nach Anspruch 12 oder 13, **dadurch gekennzeichnet, daß** in der Kontaktfläche mit der ebenen Makrostruktur Rillen (10) vorgesehen sind.

15. Vorrichtung nach Anspruch 14., **dadurch gekennzeichnet, daß** der Kontakt (8a, 8b, 8c) mit den Rillen (10) so angeordnet ist, daß diese quer zur Richtung (11) verlaufen, in der die Kontakte gegeneinander gleiten.

16. Vorrichtung nach Anspruch 14, **dadurch gekennzeichnet, daß** der Kontakt (8a, 8b, 8c) mit den Rillen (10) so angeordnet ist, daß diese unter einem Winkel von größer 0° und kleiner 90° bezüglich der Richtung (11) verlaufen, in der die Kontakte gegeneinander gleiten.

17. Vorrichtung nach Anspruch **16, dadurch gekennzeichnet, daß** die Rillen (10) unter einem Winkel von 45° bezüglich der Richtung (11) verlaufen, in der die Kontakte gegeneinander gleiten.

18. Vorrichtung nach mindestens einem der vorhergehenden Ansprüche, **dadurch gekennzeichnet, daß** die Kontaktflächen aus Feinkornsilber bestehen.

19. Vorrichtung nach mindestens einem der vorhergehenden Ansprüche, **dadurch gekennzeichnet, daß** der Kontakt (8a, 8b, 8c) mit der ebenen Makrostruktur über dem Kontakt (7a, 7b, 7c) mit der sphärischen Kontaktfläche angeordnet ist.

## Claims

1. Device for activating electric functional groups, in particular horns on steering wheels of motor vehicles, having at least two contacts (7a - 7c, 8a - 8c) which are opposite one another and which can be moved into contact with one another in order to activate the functional group and which slide against one another during contact in order to clean themselves, the contacts (7a - 7c, 8a - 8c) lying opposite one another being each attached to a carrier element (1, 2), which can both be deformed elastically, and the device being embodied as a separate assembly which can be attached to the location of use, the device having two sheet-metal parts (1, 2) as carrier elements which are connected to an insulating material by means of a plurality of encapsulations (3, 4, 5) by injection moulding, the two sheet-metal parts (1, 2) being arranged at a distance from one another, **characterized in that** the encapsulations (3, 4, 5) by injection moulding have latching elements (9a - 9c).

2. Device according to Claim 1, **characterized in that** a plug housing (6) is embodied as an encapsulation of the sheet-metal parts by injection moulding.

3. Device according to Claim 1 or 2, **characterized in that** the contacts (7a - 7c, 8a - 8c) which lie opposite one another are provided on at least one end of the carrier elements (1, 2).

4. Device according to at least one of the preceding claims, **characterized in that** the encapsulations (3, 4, 5) by injection moulding which are composed of insulating material are arranged on at least one end section of the carrier elements (1, 2) in such a way that the ends of the carrier elements on which the contacts (7a - 7c, 8a - 8c) are arranged lie exposed.

5. Device according to at least one of the preceding claims, **characterized in that** the encapsulations (3, 4, 5) by injection moulding extend further in the direction of the ends of the carrier elements on the side which, in the installed position, lies at the bottom, underneath the lower carrier element (1), than on the opposite side.

6. Device according to at least one of the preceding claims, **characterized in that** the carrier elements (1, 2) are bent upward at their ends.

7. Device according to Claim 6, **characterized in that** the carrier elements (1, 2) are bent by 20° at maximum.

8. Device according to Claim 6 or 7, **characterized in that** the carrier elements (1, 2) are bent by 15°.

9. Device according to at least one of the preceding claims, **characterized in that** each carrier element (1, 2) has two component elements (1a, 1b; 2a, 2b) which extend at an angle to one another, one end of a second component element (1b, 2b) being connected to the first component element (1a, 2a) in the encapsulation (4) of said first component element (1a, 2a) by injection moulding.

10. Device according to Claim 9, **characterized in that** pairs of contacts (7a, 8a; 7b, 8b; 7c, 8c) are provided at the ends of the first component elements (1a, 2a) and at the free end of the second component elements (1b, 2b), the pairs of contacts lying at the corners of an imaginary triangle.

11. Device according to at least one of the preceding claims, **characterized in that** the device is attached to a steering wheel or to an airbag module.

12. Device according to at least one of the preceding claims, **characterized in that** in each case one contact (7a, 7b, 7c) has a spherical contact face, and **in that** the contact (8a, 8b, 8c) lying respectively opposite has a contact face with a planar macrostructure.

13. Device according to at least one of the preceding claims, **characterized in that** the contact (8a, 8b, 8c) with the planar macrostructure has a finely structured surface.

14. Device according to Claim 12 or 13, **characterized in that** grooves (10) are provided in the contact face with the planar macrostructure.

15. Device according to Claim 14, **characterized in that** the contact (8a, 8b, 8c) with the grooves (10) is arranged in such a way that these grooves (10) extend transversely with respect to the direction (11) in which the contacts slide against one another.

16. Device according to Claim 14, **characterized in that** the contact (8a, 8b, 8c) with the grooves (10) is arranged in such a way that these grooves (10) extend at an angle of greater than 0° and less than 90° with respect to the direction (11) in which the contacts slide against one another.

17. Device according to Claim 16, **characterized in that** the grooves (10) extend at an angle of 45° with respect to the direction (11) in which the contacts slide against one another.

18. Device according to at least one of the preceding claims, **characterized in that** the contact faces are composed of finely grained silver.

19. Device according to at least one of the preceding claims, **characterized in that** the contact (8a, 8b, 8c) with the planar macrostructure is arranged over the contact (7a, 7b, 7c) with the spherical contact face.

## Revendications

1. Dispositif pour actionner des groupes de fonction électriques, notamment des klaxons montés sur le volant d'un véhicule à moteur, comportant au moins deux contacts opposés (7a à 7c, 8a à 8c), lesquels peuvent être mis en contact l'un avec l'autre en vue de l'actionnement du groupe de fonction et, durant l'établissement du contact, glissent l'un contre l'autre afin de s'autonettoyer, les contacts opposés (7a à 7c, 8a à 8c) étant fixés à un élément porteur respectif (1, 2), lesquels sont tous les deux déformables élastiquement, et le dispositif étant réalisé en tant que groupe structurel séparé, lequel peut être fixé en un emplacement, le dispositif comportant deux parties en tôle métallique (1, 2) en tant qu'éléments porteurs, qui sont reliées par l'intermédiaire de plusieurs enrobages de moulage par injection (3, 4, 5) à un matériau isolant, les deux parties en tôle métallique (1, 2) étant disposées à distance l'une de l'autre,
**caractérisé en ce que**,
les enrobages de moulage par injection (3, 4, 5) comportent des éléments d'arrêt (9a à 9c).

2. Dispositif selon la revendication 1, **caractérisé en ce qu'**un boîtier de connecteur (6) est réalisé en tant qu'enrobage de moulage par injection des parties en tôle métallique.

3. Dispositif selon la revendication 1 ou la revendication 2, **caractérisé en ce que** les deux contacts opposés (7a à 7c, 8a à 8c) sont prévus au moins à une extrémité des éléments porteurs (1, 2).

4. Dispositif selon au moins l'une quelconque des revendications précédentes, **caractérisé en ce que** les enrobages de moulage par injection (3, 4, 5) à base d'un matériau isolant sont disposés à au moins une section terminale des éléments porteurs (1, 2) de telle manière que les extrémités des éléments porteurs sur lesquels sont disposés les contacts (7a à 7c, 8a à 8c), sont découvertes.

5. Dispositif selon au moins l'une quelconque des revendications précédentes, **caractérisé en ce que** les enrobages de moulage par injection (3, 4, 5) s'étendent au-dessous de l'élément porteur inférieur (1) plus loin dans la direction des extrémités des éléments porteurs sur un côté, qui se trouve dans une position encastrée plus bas, que sur le côté opposé.

6. Dispositif selon au moins l'une quelconque des revendications précédentes, **caractérisé en ce que** les éléments porteurs (1, 2) sont coudés vers le haut à leurs extrémités.

7. Dispositif selon la revendication 6, **caractérisé en ce que** les éléments porteurs (1, 2) sont coudés selon un angle maximal de 20 degrés.

8. Dispositif selon la revendication 6 ou 7, **caractérisé en ce que** les éléments porteurs (1, 2) sont coudés selon un angle de 15 degrés.

9. Dispositif selon au moins l'une quelconque des revendications précédentes, **caractérisé en ce que** chacun des éléments porteurs (1, 2) comporte deux sous-éléments (1a, 1b ; 2a, 2b) s'étendant angulairement en se rejoignant, une extrémité d'un second sous-élément (1b, 2b) étant reliée dans l'enrobage de moulage par injection (4) d'un premier sous-élément (1a, 2a) à celui-ci.

10. Dispositif selon la revendication 9, **caractérisé en ce que** des paires de contacts (7a, 8a ; 7b, 8b ; 7c, 8c) sont prévues aux extrémités des premiers sous-éléments (1a, 2a) et à l'extrémité découverte des seconds sous-éléments (1b, 2b), les paires de contacts se trouvant dans les pointes d'un triangle imaginaire.

11. Dispositif selon au moins l'une quelconque des revendications précédentes, **caractérisé en ce que** le dispositif est fixé à un volant ou à un module de sac gonflable.

12. Dispositif selon au moins l'une quelconque des revendications précédentes, **caractérisé en ce que** respectivement un contact (7a, 7b, 7c) comporte une surface de contact en forme de sphère et **en ce que** le contact respectivement opposé (8a, 8b, 8c) présente une surface de contact dotée d'une macrostructure plane.

13. Dispositif selon au moins l'une quelconque des revendications précédentes, **caractérisé en ce que** le contact (8a, 8b, 8c) doté de la macrostructure plane comporte une surface supérieure de structure fine.

14. Dispositif selon la revendication 12 ou 13, **caractérisé en ce que** dans la surface de contact dotée de la macrostructure plane sont prévus des sillons (10).

15. Dispositif selon la revendication 14, **caractérisé en ce que** le contact (8a, 8b, 8c) doté des sillons (10) est disposé de manière à ce que ceux-ci s'étendent transversalement à la direction (11), dans laquelle les contacts glissent l'un contre l'autre.

16. Dispositif selon la revendication 14, **caractérisé en ce que** le contact (8a, 8b, 8c) doté des sillons (10) est disposé de manière à ce que ceux-ci s'étendent au-dessous d'un angle plus grand que 0 degré et plus petit que 90 degrés par rapport à la direction (11) dans laquelle les contacts glissent l'un contre l'autre.

17. Dispositif selon la revendication 16, **caractérisé en ce que** les sillons (10) s'étendent au-dessous d'un angle de 45 degrés par rapport à la direction (11) dans laquelle les contacts glissent l'un contre l'autre.

18. Dispositif selon au moins l'une quelconque des revendications précédentes, **caractérisé en ce que** les surfaces de contact sont constituées à base d'argent à grain fin.

19. Dispositif selon au moins l'une quelconque des revendications précédentes, **caractérisé en ce que** le contact (8a, 8b, 8c) doté de la macrostructure plane est disposé au-dessus du contact (7a, 7b, 7c) doté de la surface de contact en forme de sphère.
